# EUROPEAN PATENT APPLICATION

(11) **EP 2 079 260 A1**
(43) Date of publication of application: **15.07.2009**
(21) Application number: 08290017.6
(22) Date of filing: 09.01.2008
(51) Int. Cl.: H04W 16/14

(54) **Method of operating a cognitive radio device and cognitive radio device**

(71) Applicant: Alcatel Lucent, 75008 Paris (FR)
(72) Inventor: Walter, Siegfried, 75239 Eisingen (DE)
(74) Representative: Schäfer, Wolfgang

(57) **Abstract**

The invention relates to a method of operating a cognitive radio device (100), particularly a mobile terminal, which is capable of establishing radio communications with a further radio device, particularly a base station of a communications network and/or a further mobile terminal.

The inventive method is characterized by:
- providing a communication parameter database (110) local to said cognitive radio device (100), wherein said communication parameter database (110) comprises communication parameters related to geographic locations,
- determining a geographic location of said cognitive radio device (100), and by
- choosing one or more communication parameters for a future radio communication depending on said communication parameter database (110) and the determined location of the cognitive radio device (100).

## Description

The present invention relates to a method of operating a cognitive radio device, particularly a mobile terminal, which is capable of establishing radio communications with a further radio device, particularly a base station of a communications network and/or a further mobile terminal.

The present invention further relates to a cognitive radio device, particularly a mobile terminal, which is capable of establishing radio communications with a further radio device, particularly a base station of a communications network and/or a further mobile terminal.

Methods and devices of the aforementioned type are well known in the art. Concepts such as the cognitive radio system provide for "intelligent" system components, inter alia for cognitive radio devices, that are capable of dynamically altering communication parameters, for instance in order to adapt to various different communications standards and the like. In contrast to well-established wireless communications systems according to the GSM (global system for mobile communications) or UMTS (universal mobile telecommunications system) standard, cognitive radio devices are not limited to certain dedicated frequency bands or other essential resources required for communications. They may rather employ a wide variety of different frequency bands at least some of which are not explicitly reserved for present wireless communications systems. For this purpose, cognitive radio devices are equipped with corresponding transceiver hardware that allows to use the wide variety of frequency ranges. In many conceptual studies, the versatility of such cognitive radio devices is enabled by software defined radio (SDR) technology, which allows to define and alter communication parameters - in addition to choosing from a variety of frequency bands - such as transmission protocols and/or modulation schemes, coding/decoding algorithms on a software basis.

However, the existing concepts for cognitive radio devices share the significant disadvantage that the cognitive radio devices are required to heavily scan the radio environment in order to acquire sufficient information on possible radio communications links or frequency ranges not suitable for radio communications and the like. This scanning, which in the worst case has to be performed nearly permanently, leads to excessive battery usage and thus reduced mobility.

Moreover, due to the versatility of the cognitive radio devices in terms of parameter ranges of the communication parameters, the scanning process is very complex if every possible combination of different communication parameters has to be probed.

Furthermore, additional hardware in form of a separate tuner/receiver is required by the contemporary solutions because the primary tuner/receiver system is reserved for ordinary communication.

Consequently, it is an object of the present invention to provide an improved method of operating a cognitive radio device and an improved cognitive radio device which offer a high degree of operational flexibility and at the same time avoid the disadvantages of the known concepts and approaches.

Regarding the above-mentioned method, this object is achieved according to the present invention by:
- providing a communication parameter database local to said cognitive radio device, wherein said communication parameter database comprises communication parameters related to geographic locations,
- determining a geographic location of said cognitive radio device, and by
- choosing one or more communication parameters for a future radio communication depending on said communication parameter database and the determined location of the cognitive radio device.

The inventive method of operating a cognitive radio device advantageously enables to avoid the process of permanently scanning a radio environment in order to acquire sufficient information on possible radio communication links or frequency ranges and the like. The inventive method rather enables to determine suitable communication parameters based on the current location of the cognitive radio device directly from the local communication parameter database. Accordingly, a cognitive radio device capable of performing the inventive method is not required to be equipped with a separate tuner/receiver for performing said process of scanning. Furthermore, avoiding the permanent scanning increases battery lifetime of the cognitive radio device and is of particular importance to mobile applications.

According to an advantageous embodiment of the present invention, said communication parameters comprise information on radio frequencies which may or may not be accessed and/or scanned by the cognitive radio device. Thereby, on the one hand it is guaranteed that an inventive cognitive radio device will not even probe such frequency ranges which are generally not provided for radio communications, but which may rather be reserved for scientific purposes, such as radio astronomy or the like. On the other hand, by directly determining valid frequency ranges suitable for radio communications by means of the local communication parameter database, the lengthy scanning process known from conventional cognitive radio systems can be avoided. As a consequence, communication services may be established faster than with conventional systems and furthermore the battery usage is reduced.

According to a further advantageous embodiment of the present invention, said communication parameters comprise information on general frequency spectrum usage which enables the cognitive radio device to more precisely determine location-dependent suitable frequency ranges to be used for future communications. Furthermore, depending on the general frequency spectrum usage, a bandwidth efficiency or the like may be controlled, thus adapting the current radio frequency transmission behaviour of the cognitive radio device to the available spectrum resources.

The communication parameters stored in the inventive communication parameter database may also relate to transmission protocols and/or modulation schemes and/or coding/decoding algorithms or further information required for establishing communications thus enabling the inventive device to efficiently set up communication without requiring to probe every combination of communication parameters.

Yet another very advantageous embodiment of the present invention is **characterized in that** said communication parameters comprise information on further radio devices, which may particularly be formed by base stations of a communications network. Likewise, the communication parameters may also represent information relating to radio access points and other entities which are generally capable of radio communication with the inventive cognitive radio device. Furthermore, said communication parameters may comprise information on frequency ranges and/or air interfaces and/or services related to the further radio devices.

A further very advantageous embodiment of the present invention is **characterized in that** said step of choosing comprises:
- determining which type of radio communications is possible at the determined location of the cognitive radio device,
- selecting from said possible types the type of radio communications which fits best, according to predetermined parameters, to a service that is required, e.g. for a user of the cognitive radio device.

Thereby, the inventive cognitive radio device may efficiently select a type of radio communications which satisfies the requirements of the respective user request with regard to the predetermined parameters, such as maximum bandwidth, real time requirements and the like.

According to a further advantageous embodiment of the present invention, the inventive cognitive radio device may also verify and/or update the communication parameters of the communication parameter database and/or the geographic location during and/or after a radio communication, whereby the quality of information of the inventive communication parameter database is ensured and/or improved. At the same time, separate scanning procedures for acquiring such information are avoided resulting in increased battery lifetime.

A further advantageous embodiment of the present invention may also provide for a plurality of different communication parameter databases, each of which may e.g. be limited to a certain geographic region, such as a country or a continent.

A further solution to the object of the present invention is given by a cognitive radio device according to claim 8.

Further features, aspects and advantages of the present invention are presented in the following detailed description with reference to the drawings, in which:
- Figure 1: depicts a simplified block diagram of an embodiment of the inventive cognitive radio device, and
- Figure 2: depicts a simplified flow chart of an embodiment of the inventive method.

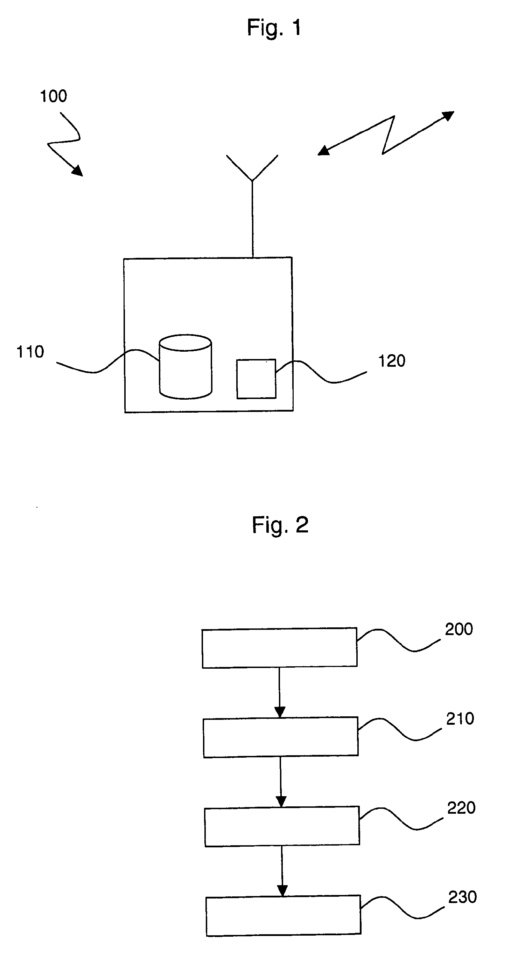

Figure 1 depicts a simplified block diagram of an inventive cognitive radio device 100 which is capable of establishing radio communications with a further radio device such as a base station of a communications network or a mobile terminal or the like. The inventive cognitive radio device 100 may for instance be implemented as a mobile device being part of a cognitive radio system, network elements of which are capable of dynamically altering communication parameters.

Apart from a specific frequency band that is used for radio frequency communications, said communication parameters may also comprise transmission protocols and/or modulation schemes and/or coding/decoding algorithms or the like. By dynamically altering these parameters, the cognitive radio device 100 may e.g. selectively communicate with GSM or UMTS base stations or terminals or WLAN (wireless local area network) access points or other systems capable of radio communications. The cognitive radio device 100 may also use such combinations of communication parameters which do not relate to currently deployed communication systems such as GSM or UMTS but rather to future communication systems. Advantageously, the cognitive radio device 100 utilizes SDR technology to achieve maximum flexibility regarding the possible combinations and ranges of the communication parameters.

According to the present invention, said cognitive radio device 100 comprises a communication parameter database 110 which is local to said cognitive radio device 100 and for instance realized by means of a non-volatile storage element that comprises the database 110.

The inventive communication parameter database 110 comprises communication parameters of the aforementioned type related to geographic locations. I.e., various geographic locations, such as countries, continents or other geographic areas which may be defined by coordinates, vector data or in another per se known manner are stored within said communication parameter database 110 and are associated with respective communication parameters which are valid for the respective geographic location or area.

For instance, the communication parameter database 110 may have geographic definitions of a plurality of neighbouring countries, and for each country, one or more set of communication parameters are stored. These communication parameters may for example comprise frequency range information on radio frequencies which may be used by the cognitive radio device 100 or which may not be accessed and/or even scanned by the cognitive radio device 100.

Thereby, it is advantageously possible to provide the cognitive radio device 100 on a local basis with information on which frequency ranges are valid for establishing a radio communication with a further radio device and which frequency ranges must not be accessed at all.

The inventive cognitive radio device 100 advantageously determines its geographic location, which may e.g. be performed by employing the well-known GPS (Global Positioning System) technology or a LORAN-C-based position detection or any other system known in the art. Figure 1 depicts a GPS system 120 that is integrated in said inventive cognitive radio device 100.

According to the present invention, the inventive cognitive radio device 100 chooses one or more communication parameters for a future radio communication depending on said communication parameter database 110 and the determined location of the cognitive radio device 100.

As an example, in a first step 200 of the inventive method, cf. figure 2, prior to establishing a communication or to scanning a frequency range, the inventive cognitive radio device 100 determines its current location by means of the GPS system 120 (figure 1).

After that, in step 210, the inventive cognitive radio device 100 retrieves from its local communication parameter database 110 (figure 1) such sets of communication parameters which are valid within the geographic location of the cognitive radio device 100 previously determined in step 200.

Thereby, the inventive cognitive radio device 100 is provided with all the information necessary to initiate future radio communications with further radio devices without being required to perform a lengthy process of scanning a plurality of frequency ranges or other communication parameter ranges, as is required with conventional systems.

Accordingly, in step 220, the inventive cognitive radio device 100 (figure 1) establishes a radio communication with a further radio device by employing one or more parameter sets previously retrieved from the inventive communication parameter database 110.

By applying the inventive principle, the cognitive radio device 100 is not required to permanently scan frequency ranges or other communication parameter ranges in order to establish radio communications. By using the inventive communication parameter database 110 the cognitive radio device 100 may rather directly initiate radio communications based on stored communication parameters.

Thereby, the inventive cognitive radio device 100 does not require a separate transceiver system reserved for scanning as used by prior art devices which have a primary transceiver for user communication and said extra transceiver for scanning purposes. Furthermore, since there is no need to permanently scan frequency or other communication parameter ranges, battery lifetime of the inventive cognitive radio device 100 is increased.

According to a further advantageous embodiment of the present invention, the inventive cognitive radio device 100 may also verify and/or update the communication parameters of the communication parameter database 110 and/or the geographic location during and/or after a radio communication, which is symbolized by step 230 of figure 2. For example, a first communication may be established by using communication parameters of the communication parameter database 110, and during such communication, the communication parameter database 110 may be extended by further communication parameters valid in the respective area. Future communications of the cognitive radio device 100 in the same area may utilize the further communication parameters received during the first communication.

By verifying and/or updating the communication parameters, the quality of information of the inventive communication parameter database 110 is ensured and maintained, and at the same time separate scanning procedures for acquiring such information are avoided resulting in increased battery lifetime and less complex and expensive cognitive radio devices 100. The inventive cognitive radio devices 100 particularly need not be equipped with an additional tuner/receiver or further components for radio frequency signal processing for performing the permanent scanning process known from prior art systems.

Another very advantageous embodiment of the present invention proposes to determine which type of radio communications is possible at the determined location of the cognitive radio device 100 by analysing the communication parameter set previously retrieved from the communication parameter database 110 in step 210 of figure 2.

After that, the inventive cognitive radio device 100 may advantageously select from the possible types of radio communications the type which fits best to a service that is e.g. currently required from a user of the cognitive radio device 100. To enable such determination, various criteria may be provided to form the predetermined parameters according to which the type of radio communication is chosen. As an example, bandwidth restrictions, real time requirements and the like may be employed. For instance, if a user of the cognitive radio device 100 currently requests broadband services, the cognitive radio device 100 will preferably choose a corresponding communication type such as WLAN communications, if possible, although other types of communications, such as e.g. a GSM communication, may also be possible at the determined location.

The principle of the present invention may be applied to virtually any cognitive radio device, preferably a mobile cognitive radio device 100.

A further advantageous embodiment of the present invention may also provide for a plurality of different communication parameter databases 110 (figure 1), each of which may e.g. be limited to a certain geographic region, such as a country or a continent. In this case, a cognitive radio device 100 may initially be equipped with just one communication parameter database that is e.g. associated with a country in which the cognitive radio device 100 is to be sold. Further communication parameter databases may be stored to the inventive cognitive radio device 100 afterwards e.g. by a firmware update or by using a communications link, such as an USB (Universal Serial Bus) connection to a personal computer or even the wireless communication provided for by the cognitive radio device 100.

## Claims

1. Method of operating a cognitive radio device (100), particularly a mobile terminal, which is capable of establishing radio communications with a further radio device, particularly a base station of a communications network and/or a further mobile terminal, **characterized by**:
- providing a communication parameter database (110) local to said cognitive radio device (100), wherein said communication parameter database (110) comprises communication parameters related to geographic locations,
- determining a geographic location of said cognitive radio device (100), and by
- choosing one or more communication parameters for a future radio communication depending on said communication parameter database (110) and the determined location of the cognitive radio device (100).

2. Method according to claim 1, **characterized in that** said communication parameters comprise information on radio frequencies which may or may not be accessed and/or scanned by the cognitive radio device (100).

3. Method according to one of the preceding claims, **characterized in that** said communication parameters comprise information on general frequency spectrum usage.

4. Method according to one of the preceding claims, **characterized in that** said communication parameters comprise information on further radio devices, particularly base stations of a communications network and/or radio access points, and information on frequency ranges and/or air interfaces and/or services related to said further radio devices.

5. Method according to one of the preceding claims, **characterized by** verifying and/or updating the communication parameters of said communication parameter database (110) and/or the geographic location during and/or after a radio communication.

6. Method according to one of the preceding claims, **characterized in that** a plurality of communication parameter databases (110) is provided, each communication parameter databases (110) having specific information related to a geographic region, particularly a country or a continent, and **characterized by** storing one or more of said communication parameter databases (110) to said cognitive radio device (100).

7. Method according to one of the preceding claims, **characterized in that** said step of choosing comprises:
- determining which type of radio communications is possible at the determined location of the cognitive radio device (100),
- selecting from said possible types the type of radio communications which fits best, according to predetermined parameters, to a service that is required, e.g. from a user of the cognitive radio device (100).

8. Cognitive radio device (100), particularly a mobile terminal, which is capable of establishing radio communications with a further radio device, particularly a base station of a communications network and/or a further mobile terminal, **characterized by** comprising a local communication parameter database (110), wherein said communication parameter database (110) comprises communication parameters related to geographic locations, and **characterized in that** said cognitive radio device (100) is configured to determine its geographic location, and to choose one or more communication parameters for a future radio communication depending on said communication parameter database (110) and the determined location.

9. Cognitive radio device (100) according to claim 8, **characterized by** storage means for storing one or more communication parameter databases (110).

10. Cognitive radio device (100) according to one of the claims 8 to 9, **characterized in that** said communication parameters comprise information on general frequency spectrum usage.

11. Cognitive radio device (100) according to one of the claims 8 to 10, **characterized in that** said communication parameters comprise information on further radio devices, particularly base stations of a communications network and/or radio access points, and information on frequency ranges and/or air interfaces and/or services related to said further radio devices.

12. Cognitive radio device (100) according to one of the claims 8 to 11, **characterized in that** said cognitive radio device (100) is configured to verify and/or update the communication parameters of said communication parameter database (110) and/or the geographic location during and/or after a radio communication.

13. Cognitive radio device (100) according to one of the claims 8 to 12, **characterized in that** said cognitive radio device (100) is configured to
- determine which type of radio communications are possible at the determined location of the cognitive radio device (100),
- select from said possible types the type of radio communications which fits best, according to predetermined parameters, to a service that is required, e.g. from a user of the cognitive radio device (100).

## Amended claims

### Amended claims in accordance with Rule 137(2) EPC.

**1.** Method of operating a mobile cognitive radio device (100), particularly a mobile terminal, which is capable of establishing radio communications with a further radio device, particularly a base station of a communications network and/or a further mobile terminal, **characterized by**:
- providing a communication parameter database (110) local to said mobile cognitive radio device (100), wherein said communication parameter database (110) comprises communication parameters related to geographic locations,
- determining a geographic location of said mobile cognitive radio device (100), and by
- choosing one or more communication parameters for a future radio communication depending on said local communication parameter database (110) and the determined location of the mobile cognitive radio device (100).

**2.** Method according to claim 1, **characterized in that** said communication parameters comprise information on radio frequencies which may or may not be accessed and/or scanned by the cognitive radio device (100).

**3.** Method according to one of the preceding claims, **characterized in that** said communication parameters comprise information on general frequency spectrum usage.

**4.** Method according to one of the preceding claims, **characterized in that** said communication parameters comprise information on further radio devices, particularly base stations of a communications network and/or radio access points, and information on frequency ranges and/or air interfaces and/or services related to said further radio devices.

**5.** Method according to one of the preceding claims, **characterized by** verifying and/or updating the communication parameters of said communication parameter database (110) and/or the geographic location during and/or after a radio communication.

**6.** Method according to one of the preceding claims, **characterized in that** a plurality of communication parameter databases (110) is provided, each communication parameter databases (110) having specific information related to a geographic region, particularly a country or a continent, and **characterized by** storing one or more of said communication parameter databases (110) to said cognitive radio device (100).

**7.** Method according to one of the preceding claims, **characterized in that** said step of choosing comprises:
- determining which type of radio communications is possible at the determined location of the cognitive radio device (100),
- selecting from said possible types the type of radio communications which fits best, according to predetermined parameters, to a service that is required, e.g. from a user of the cognitive radio device (100).

**8.** Mobile cognitive radio device (100), particularly a mobile terminal, which is capable of establishing radio communications with a further radio device, particularly a base station of a communications network and/or a further mobile terminal, **characterized by** comprising a local communication parameter database (110), wherein said communication parameter database (110) comprises communication parameters related to geographic locations, and **characterized in that** said mobile cognitive radio device (100) is configured to determine its geographic location, and to choose one or more communication parameters for a future radio communication depending on said local communication parameter database (110) and the determined location.

**9.** Cognitive radio device (100) according to claim 8, **characterized by** storage means for storing one or more communication parameter databases (110).

**10.** Cognitive radio device (100) according to one of the claims 8 to 9, **characterized in that** said communication parameters comprise information on general frequency spectrum usage.

**11.** Cognitive radio device (100) according to one of the claims 8 to 10, **characterized in that** said communication parameters comprise information on further radio devices, particularly base stations of a communications network and/or radio access points, and information on frequency ranges and/or air interfaces and/or services related to said further radio devices.

**12.** Cognitive radio device (100) according to one of the claims 8 to 11, **characterized in that** said cognitive radio device (100) is configured to verify and/or update the communication parameters of said communication parameter database (110) and/or the geographic location during and/or after a radio communication.

**13.** Cognitive radio device (100) according to one of the claims 8 to 12, **characterized in that** said cognitive radio device (100) is configured to
- determine which type of radio communications are possible at the determined location of the cognitive radio device (100),
- select from said possible types the type of radio communications which fits best, according to predetermined parameters, to a service that is required, e.g. from a user of the cognitive radio device (100).
